# EUROPEAN PATENT APPLICATION

(11) **EP 4 444 003 A1**
(43) Date of publication of application: **09.10.2024**
(21) Application number: 22899701.1
(22) Date of filing: 11.01.2022
(51) Int. Cl.: H04W 72/04

(54) **DOWNLINK CONTROL INFORMATION DETECTION METHOD AND APPARATUS, DOWNLINK CONTROL INFORMATION SENDING METHOD AND APPARATUS, AND STORAGE MEDIUM**

(30) Priority: 02.12.2021 WO PCT/CN2021/135145
(71) Applicant: Beijing Xiaomi Mobile Software Co., Ltd., Beijing 100085 (CN)
(72) Inventor: ZHAO, Qun, Beijing 100085 (CN)
(74) Representative: Gunzelmann, Rainer
(86) International application number: PCT/CN2022/071423
(87) International publication number: WO 2023/097875

(57) **Abstract**

The present disclosure provides a downlink control information detection method and apparatus, a downlink control information sending method and apparatus, and a storage medium. The downlink control information detection method comprises: detecting and receiving, in a time unit and on the basis of the priority order of a plurality of DCIs, corresponding DCIs, wherein the plurality of DCIs comprise at least a group common DCI used for simultaneously scheduling terminal services of a plurality of terminals; and in response to determining that the number of DCIs having been detected and received in the time unit reaches the maximum number of DCIs supported to be detected by the terminal in one time unit, stopping DCI detection in the time unit. In the present disclosure, under the condition that the number of DCIs to be received by the terminal in a time unit exceeds the maximum number of DCIs supported by the terminal, both the terminal and a base station can accurately determine the DCIs detected and received by the terminal, thereby avoiding the problem of unpredictable terminal behaviors, so that the terminal and the base station have the same understanding of data transmission and reception, and the degradation of system performance is avoided.

## Description

### CROSS-REFERENCE TO RELATED APPLICATION

This application claims priority to and benefits of International Application No. PCT/CN2021/135145, filed December 2, 2021, the entire content of which is incorporated herein by reference.

### FIELD

The present invention relates to the field of communication technology, and more particularly to a method and apparatus for detecting downlink control information, a method and apparatus for sending downlink control information, and a storage medium.

### BACKGROUND

At present, different types of services have different characteristics in such as period, delay, transmission rate, and so on. The network side needs to schedule data transmissions of respective types of services via multiple downlink control information (DCIs). When the network side needs to transmit multiple types of services, it may occur that multiple DCIs need to be transmitted within a same time unit.

Since a terminal needs to detect and receive DCIs in multiple search spaces, or the terminal needs to detect and receive multiple DCIs scrambled by different group-radio network temporary identities (G-RNTIs) in a search space, so a number of DCIs that need to be detected and received finally may exceed a maximum DCI number that the terminal supports to detect.

When a number of DCIs sent at the network side in the same time unit exceeds the maximum DCI number that the terminal supports to detect, a behavior of the terminal is unpredictable, which may lead to inconsistent understanding of the network side and the terminal side on data transmission and reception, and eventually lead to degradation of system performances.

### SUMMARY

To overcome the problems in the related art, embodiments of the present invention provide a method and apparatus for detecting downlink control information, a method and apparatus for sending downlink control information, and a storage medium.

According to a first aspect of embodiments of the present invention, there is provided a method for detecting downlink control information. The method is applied to a terminal, and includes: detecting and receiving corresponding downlink control information (DCI) according to a priority order of multiple DCIs within a time unit; and in response to determining that a number of DCIs detected and received within the time unit reaches a maximum DCI number that the terminal supports to detect within the time unit, stopping detecting DCI within the time unit. The multiple DCIs at least include group common DCI for simultaneously scheduling terminal services of multiple terminals.

Optionally, the maximum DCI number is a maximum unicast DCI number. Detecting and receiving the corresponding DCI according to the priority order of multiple DCIs within the time unit includes: detecting and receiving corresponding DCI in a group common search space according to a first priority order within the time unit; and in response to determining that a number of DCIs detected and received in the group common search space is less than the maximum unicast DCI number, detecting and receiving corresponding DCI in a UE search space (USS) according to a second priority order. The group common search space is a common search space for at least transmitting the group common DCI. The USS is a search space that corresponds to the terminal and is used for transmitting unicast DCI.

Optionally, the maximum DCI number is a maximum unicast DCI number. Detecting and receiving the corresponding DCI according to the priority order of multiple DCIs within the time unit includes: detecting and receiving corresponding DCI in a UE search space (USS) according to a second priority order within the time unit; and in response to determining that a number of DCIs detected and received in the USS is less than the maximum unicast DCI number, detecting and receiving corresponding DCI in a group common search space according to a first priority order. The USS is a search space that corresponds to the terminal and is used for transmitting unicast DCI. The group common search space is a common search space for at least transmitting the group common DCI.

Optionally, the first priority order is used to indicate at least one of: a priority order of group common search space identities from high to low or from low to high; a priority order of group-radio network temporary identifier values from high to low or from low to high; a priority order of terminal services; or a priority order of control resource set identities from high to low or from low to high.

Optionally, the second priority order is used to indicate at least one of: a priority order of search space identifies from high to low or from low to high; or a priority order of control resource set identities from high to low or from low to high.

Optionally, the method further includes any of: determining the first priority order according to a protocol; or determining the first priority order according to a radio resource control (RRC) signaling sent by a base station.

Optionally, the method further includes any of: determining the second priority order according to a protocol; or determining the second priority order according to a radio resource control (RRC) signaling sent by a base station.

Optionally, the group common DCI detected and received in the group common search space is regarded as unicast downlink DCI.

Optionally, the method further includes: determining the maximum DCI number according to a terminal capability. The terminal capability is used to indicate a maximum group common DCI number that the terminal supports to detect within the time unit.

Optionally, the terminal capability is used to indicate the maximum group common DCI number that the terminal supports to detect within the time unit in a serving cell.

Optionally, detecting and receiving the corresponding DCI according to the priority order of multiple DCIs within the time unit includes: detecting and receiving group common DCI in a group common search space within the time unit according to a third priority order. The group common search space is a common search space for at least transmitting the group common DCI. In response to determining that the number of DCIs detected and received within the time unit reaches the maximum DCI number that the terminal supports to detect within the time unit, stopping detecting DCI within the time unit includes: in response to determining that a number of group common DCIs detected and received within the time unit reaches the maximum group common DCI number indicated by the terminal capability, stopping detecting DCI in the group common search space within the time unit.

Optionally, the third priority order is used to indicate at least one of: a priority order of group common search space identities from high to low or from low to high; a priority order of group-radio network temporary identifier values from high to low or from low to high; a priority order of terminal services; or a priority order of control resource set identities from high to low or from low to high.

Optionally, the method further includes any of: determining the third priority order according to a protocol; or determining the third priority order according to a radio resource control (RRC) signaling sent by a base station.

Optionally, a sum of the maximum group common DCI number indicated by the terminal capability and a number of unicast DCIs detected and received by the terminal within the time unit is less than or equal to a maximum unicast DCI number that the terminal supports to detect within the time unit.

According to a second aspect of embodiments of the present invention, there is provided a method for sending downlink control information. The method is applied to a base station, and includes: sending multiple downlink control information (DCIs) to a terminal within a time unit; and determining at least one DCI detected and received by the terminal from the multiple DCIs within the time unit according to a priority order of the multiple DCIs and a maximum DCI number that the terminal supports to detect within the time unit. The multiple DCIs at least include group common DCI for simultaneously scheduling terminal services of multiple terminals.

Optionally, the maximum DCI number is a maximum unicast DCI number. Determining the at least one DCI detected and received by the terminal from the multiple DCIs within the time unit according to the priority order of multiple DCIs and the maximum DCI number that the terminal supports to detect within the time unit includes: in response to determining that a first number of DCIs sent by the base station in a group common search space is greater than or equal to the maximum unicast DCI number, determining that the terminal detects and receives DCIs of the maximum unicast DCI number sent by the base station in the group common search space according to a first priority order within the time unit; and in response to determining that the first number is less than the maximum unicast DCI number, determining that the terminal detects and receives DCIs of the first number sent by the base station in the group common search space according to the first priority order and detects and receives DCIs of a second number sent by the base station in a UE search space (USS) according to a second priority order within the time unit. The group common search space is a common search space for at least transmitting group common DCI. The USS is a search space that corresponds to the terminal and is used for transmitting unicast DCI, and a sum of the first number and the second number is equal to the maximum unicast DCI number.

Optionally, the maximum DCI number is a maximum unicast DCI number. Determining the at least one DCI detected and received by the terminal from the multiple DCIs within the time unit according to the priority order of multiple DCIs and the maximum DCI number that the terminal supports to detect within the time unit includes: in response to determining that a third number of DCIs sent by the base station in a UE search space (USS) is greater than or equal to the maximum unicast DCI number, determining that the terminal detects and receives DCIs of the maximum unicast DCI number sent by the base station in the USS according to a second priority order within the time unit; and in response to determining that the third number is less than the maximum unicast DCI number, determining that the terminal detects and receives DCIs of the third number sent by the base station in the USS according to the second priority order and detects and receives DCIs of a fourth number sent by the base station in a group common search space according to a first priority order within the time unit. The USS is a search space that corresponds to the terminal and is used for transmitting unicast DCI. The group common search space is a common search space for at least transmitting group common DCI, and a sum of the third number and the fourth number is equal to the maximum unicast DCI number.

Optionally, the first priority order is used to indicate at least one of: a priority order of group common search space identities from high to low or from low to high; a priority order of group-radio network temporary identifier values from high to low or from low to high; a priority order of terminal services; or a priority order of control resource set identities from high to low or from low to high.

Optionally, the second priority order is used to indicate at least one of: a priority order of search space identifies from high to low or from low to high; or a priority order of control resource set identities from high to low or from low to high.

Optionally, the method further includes: sending a radio resource control (RRC) signaling to the terminal. The RRC signaling is used to indicate to the terminal the first priority order and/or the second priority order configured by the base station.

Optionally, the group common DCI sent to the terminal in the group common search space is regarded as unicast downlink DCI.

Optionally, the maximum DCI number is a maximum group common DCI number determined according to a terminal capability of the terminal. Determining the at least one DCI detected and received by the terminal from the multiple DCIs within the time unit according to the priority order of multiple DCIs and the maximum DCI number that the terminal supports to detect within the time unit includes: in response to determining that a fifth number of group common DCIs sent by the base station in a group common search space is greater than the maximum group common DCI number, determining that the terminal detects and receives group common DCIs of the maximum group common DCI number sent by the base station in the group common search space according to a third priority order within the time unit; and in response to determining that the fifth number is less than or equal to the maximum group common DCI number, determining that the terminal detects and receives group common DCIs of the fifth number sent by the base station in the group common search space according to the third priority order within the time unit. The group common search space is a common search space for at least transmitting the group common DCI.

Optionally, the third priority order is used to indicate at least one of: a priority order of group common search space identities from high to low or from low to high; a priority order of group-radio network temporary identifier values from high to low or from low to high; a priority order of terminal services; or a priority order of control resource set identities from high to low or from low to high.

Optionally, the method further includes: sending a radio resource control (RRC) signaling to the terminal. The RRC signaling is used to indicate to the terminal the third priority order configured by the base station.

Optionally, a sum of the maximum group common DCI number indicated by the terminal capability and a number of unicast DCIs sent by the base station to the terminal within the time unit is less than or equal to a maximum unicast DCI number that the terminal supports to detect within the time unit.

According to a third aspect of embodiments of the present invention, there is provided an apparatus for detecting downlink control information. The apparatus is applied to a terminal, and includes: an executing module; and a controlling module. The executing module is configured to detect and receive corresponding downlink control information (DCI) according to a priority order of multiple DCIs within a time unit. The multiple DCIs at least include group common DCI for simultaneously scheduling terminal services of multiple terminals. The controlling module is configured to stop detecting DCI within the time unit, in response to determining that a number of DCIs detected and received within the time unit reaches a maximum DCI number that the terminal supports to detect within the time unit.

According to a fourth aspect of embodiments of the present invention, there is provided an apparatus for sending downlink control information. The apparatus is applied to a base station, and includes: a sending module and a DCI determining module. The sending module is configured to send multiple downlink control information (DCIs) to a terminal within a time unit. The multiple DCIs at least include group common DCI for simultaneously scheduling terminal services of multiple terminals. The DCI determining module is configured to determine at least one DCI detected and received by the terminal from the multiple DCIs within the time unit according to a priority order of the multiple DCIs and a maximum DCI number that the terminal supports to detect within the time unit.

According to a fifth aspect of embodiments of the present invention, there is provided a computer-readable storage medium, having stored therein computer programs for executing the method for detecting downlink control information as described in any embodiment above.

According to a sixth aspect of embodiments of the present invention, there is provided a computer-readable storage medium, having stored therein computer programs for executing the method for sending downlink control information as described in any embodiment above.

According to a seventh aspect of embodiments of the present invention, there is provided a device for detecting downlink control information, which includes: a processor; and a memory for storing processor-executable instructions. The processor is configured to perform the method for detecting downlink control information as described in any embodiment above.

According to an eighth aspect of embodiments of the present invention, there is provided a device for sending downlink control information, which includes: a processor; and a memory for storing processor-executable instructions. The processor is configured to perform the method for sending downlink control information as described in any embodiment above.

The technical solutions according to embodiments of the present invention may include the following beneficial effects.

In the above embodiments, the terminal is able to detect and receive DCI within a time unit according to the priority order of multiple DCIs, and the base station is also able to determine at least one DCI detected and received by the terminal from the multiple DCIs within the time unit according to the priority order of the multiple DCIs and the maximum DCI number that the terminal supports to detect within a time unit. In the present invention, in the case where the number of DCIs to be received by the terminal within a time unit exceeds the maximum DCI number supported by the terminal, both the terminal and the base station can accurately determine the DCI detected and received by the terminal, thereby avoiding the problem that the behavior of the terminal is unpredictable, so that the terminal and the base station have a consistent understanding on the data transmission and reception, avoiding degradation of the system performance.

It is to be understood that both the foregoing general description and the following detailed description are illustrative and explanatory only and are not restrictive of the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
FIG. 1 is a schematic diagram showing a detection scenario of downlink control information according to an illustrative embodiment.
FIG. 2 is a schematic flowchart showing a method for detecting downlink control information according to an illustrative embodiment.
FIG. 3 is a schematic flowchart showing another method for detecting downlink control information according to an illustrative embodiment.
FIG. 4 is a schematic flowchart showing another method for detecting downlink control information according to an illustrative embodiment.
FIG. 5 is a schematic flowchart showing another method for detecting downlink control information according to an illustrative embodiment.
FIG. 6 is a schematic flowchart showing a method for sending downlink control information according to an illustrative embodiment.
FIG. 7 is a schematic flowchart showing another method for sending downlink control information according to an illustrative embodiment.
FIG. 8 is a schematic flowchart showing another method for sending downlink control information according to an illustrative embodiment.
FIG. 9 is a schematic flowchart showing another method for sending downlink control information according to an illustrative embodiment.
FIG. 10 is a schematic flowchart showing a method for sending and detecting downlink control information according to an illustrative embodiment.
FIG. 11A to FIG. 11B are schematic flowcharts of detection scenarios of downlink control information according to an illustrative embodiment.
FIG. 12 is a schematic block diagram showing an apparatus for detecting downlink control information according to an illustrative embodiment.
FIG. 13 is a schematic block diagram showing an apparatus for sending downlink control information according to an illustrative embodiment.
FIG. 14 is a schematic structural diagram showing a device for detecting downlink control information according to an illustrative embodiment of the present invention.
FIG. 15 is a schematic structural diagram showing a device for sending downlink control information according to an illustrative embodiment of the present invention.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present invention. Instead, they are merely examples of apparatuses and methods consistent with some aspects of the present invention as recited in the appended claims.

Terms used in embodiments of the present invention are only for the purpose of describing specific embodiments, but should not be construed to limit the present invention. As used in embodiments of the present invention and the appended claims, "alan", "said" and "the" in singular forms are intended to include plural forms, unless clearly indicated in the context otherwise. It should also be understood that, the term "and/or" used herein represents and contains any or all possible combinations of one or more associated items listed.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of embodiments of the present invention. As used herein, the term "if" may be construed to mean "when" or "upon" or "in response to determining" depending on the context.

In Release-17 (Rel-17), multicast broadcast service (MBS) supports multiple types of services, such as public safety and mission critical (public safety early warning) information, vehicle to everything (V2X) related information, internet protocol TV (IPTV), over the air (OTA), group communication, etc. Different types of services are different in transmission period and transmission rate. For example, for IPTV, the data arrival is often periodic, and the requirement on data reliability generally is not very high, while for the public safety and mission critical information, its data arrival is often sudden, and the reliability requirement in data transmission is extremely high. Correspondingly, the network side needs to configure different search spaces for downlink control channels that schedule different services, and these search spaces have different PDCCH candidate configurations, different monitoring periods, and may be bound with different G-RNTIs.

For a terminal, a number of DCIs that can be decoded in each time unit depends on a terminal capability. For example, for a terminal that does not support a FG 3-5b capability, its corresponding time unit is limited to a slot, and in a slot in a frequency division duplexing (FDD) frequency band, the terminal supports to detect only one downlink (DL) DCI and one uplink (UL) DCI, and in a slot in a time division duplexing (TDD) frequency band, the terminal supports to detect only one DL DCI and two UL DCIs, or two DL DCIs and one UL DCIs.

For a terminals supporting a FG 3-5b capability, its corresponding time unit is limited to a span, which is a time unit smaller than a slot, and generally may include a specified number of time symbols in size.

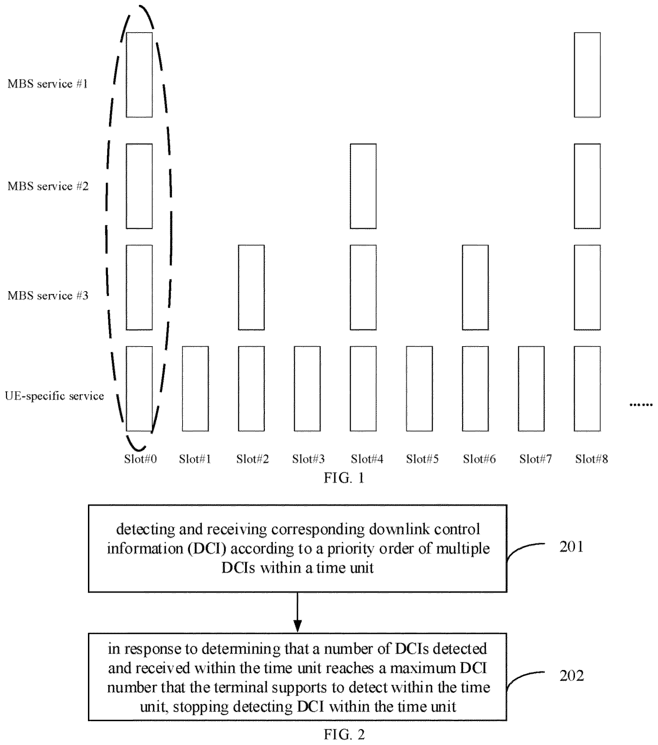

Referring to FIG. 1, the network side needs to send DCIs corresponding to MBS service #1, MBS service #2, and MBS service #3 with different periods as well as a UE-specific service, and the terminal will receive 4 DCIs in slot #0, 1 DCI in slot#1, 2 DCIs in slot#2, 1 DCI in slot#3, 3 DCIs in slot#4, 1 DCI in slot#5, 2 DCIs in slot#6, 1 DCI in slot#7, and so on.

Assuming that a maximum DCI number that the terminal supports to detect and receive is 2, behaviors of the terminal in time units such as slot#0, slot#4, and slot#8 are unpredictable, which may cause inconsistent understanding of the network side and the terminal side on data transmission and reception, and eventually lead to degradation of system performances.

In order to solve the above technical problems, the present invention provides a method for detecting downlink control information and a method for sending downlink control information. In the following, the method for detecting downlink control information provided in the present invention will be introduced first from the terminal side.

Embodiments of the present invention provide a method for detecting downlink control information, as shown in FIG. 2, which is a schematic flowchart showing a method for detecting downlink control information according to an illustrative embodiment, the method may be applied to a terminal, and may include following steps.

In step 201, corresponding downlink control information (DCI) is detected and received according to a priority order of multiple DCIs within a time unit. In embodiments of the present invention the multiple DCIs at least include group common DCI for simultaneously scheduling terminal services of multiple terminals, and the group common DCI may be a common DCI for simultaneously scheduling MBS services of multiple terminals. For a terminal that does not support the FG 3-5b capability, a size of a time unit may be a slot; for a terminal that supports the FG 3-5b capability, a size of a time unit may be a span.

In a possible implementation, the priority order of multiple DCIs may be pre-specified in a protocol. In another possible implementation, the priority order of multiple DCIs may be configured by a base station via a high-layer signaling, and the high-layer signaling may be a radio resource control (RRC) signaling.

In step 202, in response to determining that a number of DCIs detected and received within the time unit reaches a maximum DCI number that the terminal supports to detect within the time unit, DCI detection is stopped within the time unit.

In the above embodiments, the terminal can detect and receive DCI based on the priority order of multiple DCIs within a time unit, and when the number of DCIs detected and received within the time unit reaches the maximum DCI number that the terminal supports to detect within the time unit, the terminal stops detecting DCI within the time unit. In the present invention, the terminal can detect and receive DCI based on the priority order of multiple DCIs, avoiding the occurrence of a case where the behavior of the terminal is unpredictable, and the method has a high usability.

In some optional embodiments, the terminal may regard group common DCI as unicast DCI, and the number of DCIs detected and received is determined according to the group common DCI together with the unicast DCI. Correspondingly, the maximum DCI number may reuse a maximum unicast DCI number defined in a related protocol. Specifically, the terminal may detect and receive DCI in any of, but not limited to, the following manners.

In a first manner, the terminal preferentially detects and receives corresponding DCI in a group common search space, and when a number of DCIs detected and received in the group common search space is less than the maximum unicast DCI number, i.e., not beyond the terminal capability, the terminal continues detecting and receiving corresponding DCI in a UE search space.

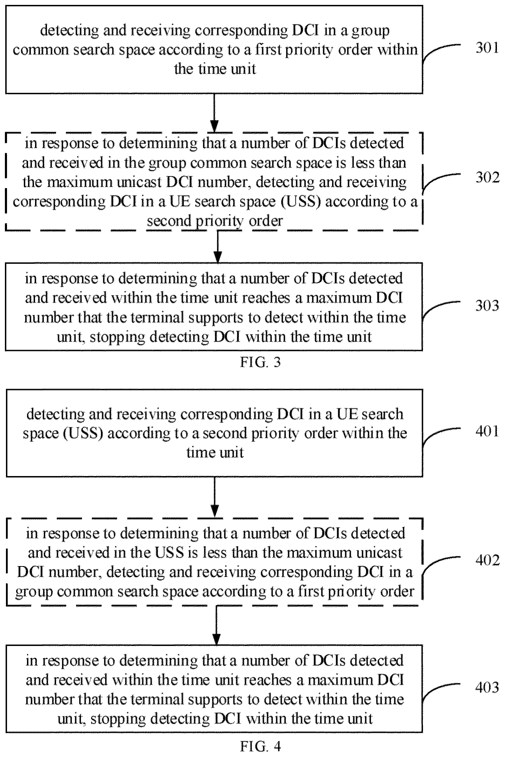

Referring to FIG. 3, which is a schematic flowchart showing a method for detecting downlink control information according to an illustrative embodiment, the method may be applied to a terminal, and may include following steps.

In step 301, corresponding DCI is detected and received in a group common search space according to a first priority order within the time unit.

In embodiments of the present invention, the group common search space is a common search space for at least transmitting the group common DCI. Both the group common DCI and the unicast DCI can be transmitted in the group common search space (CSS). The first priority order may be pre-specified in a protocol, or may be configured by the base station side via a high-layer signaling, and the high-layer signaling may be an RRC signaling.

In step 302, in response to determining that a number of DCIs detected and received in the group common search space is less than the maximum unicast DCI number, corresponding DCI is detected and received in a UE search space (USS) according to a second priority order.

The USS is a search space that corresponds to the terminal and is used for transmitting unicast DCI.

In embodiments of the present invention, only unicast DCI can be transmitted in the UE search space (USS). If the number of DCIs detected and received by the terminal in the group common search space does not reach the maximum unicast DCI number, the terminal may continue detecting and receiving corresponding DCI in the USS according to the second priority order. The second priority order may be pre-specified in a protocol, or may be configured by the base station side via a high-layer signaling, and the high-layer signaling may be an RRC signaling.

The step 302 is optionally performed, and it will be performed when the number of DCIs detected and received in the group common search space does not reach the maximum unicast DCI number.

In step 303, in response to determining that the number of DCIs detected and received within the time unit reaches a maximum DCI number that the terminal supports to detect within the time unit, DCI detection is stopped within the time unit.

In the above embodiments, the terminal may preferentially detect and receive corresponding DCI in the group common search space according to the first priority order, and in a case where the number of DCIs detected and received in the group common search space is less than the maximum unicast DCI number, the terminal continues detecting and receiving corresponding DCI in the USS according to the second priority order, and until it is determined that the number of DCIs detected and received within the time unit reaches the maximum DCI number that the terminal supports to detect within the time unit, the terminal stops detecting DCI within the time unit. In this way, the purpose that the terminal detects and receives DCIs according to the priority order of multiple DCIs is realized, the case where the behavior of the terminal is unpredictable is avoided, and the method has a high usability.

Optionally, the above-mentioned first priority order may be used to indicate at least one of: a priority order of group common search space identities from high to low or from low to high; a priority order of group-radio network temporary identifier values from high to low or from low to high; a priority order of terminal services; or a priority order of control resource set identities from high to low or from low to high. The second priority order may be used to indicate at least one of: a priority order of search space identifies from high to low or from low to high; or a priority order of control resource set identities from high to low or from low to high.

In a possible implementation, the first priority order may be used to indicate the priority order of group common search space identities (IDs) from low to high. The terminal may, according to group common search space IDs, preferentially detect and receive corresponding group common DCI in a group common search space with a lower group common search space ID. When the number of DCIs detected and received by the terminal in the group common search space is less than the maximum unicast DCI number, the terminal continues detecting and receiving corresponding DCI in a USS according to the second priority. Until the number of DCIs detected and received within the time unit reaches the maximum unicast DCI number that the terminal supports to detect within the time unit, the terminal stops detecting DCI within the time unit.

In another possible implementation, the first priority order may be used to indicate an order of group-radio network temporary identifiers, including but not limited to indicating the priority order of group-radio network temporary identifier values from high to low or from low to high. The terminal detects and receives corresponding group common DCI in a corresponding group common search space in the order of the G-RNTI values from high to low or from low to high. If the number of DCI detected and received by the terminal in the group common search space is less than the maximum unicast DCI number, the terminal continues detecting and receiving corresponding DCI in a USS according to the second priority order. Until the number of DCIs detected and received within the time unit reaches the maximum unicast DCI number that the terminal supports to detect within the time unit, the terminal stops detecting DCI within the time unit.

In another possible implementation, the first priority order may be used to indicate the priority order of terminal services. The terminal detects and receives corresponding group common DCI in a corresponding group common search space according to the priority order of terminal services. If the number of DCIs detected and received by the terminal in the group common search space is less than the maximum unicast DCI number, the terminal continues detecting and receiving corresponding DCI in a USS according to the second priority order. Until the number of DCIs detected and received within the time unit reaches the maximum unicast DCI number that the terminal supports to detect within the time unit, the terminal stops detecting DCI within the time unit.

In another possible implementation, the first priority order may be used to indicate the priority order of control resource set (CORESET) identities (IDs) from high to low or from low to high. The terminal detects and receives corresponding group common DCI in a corresponding group common search space according to the priority order of CORESET IDs from high to low or from low to high. If the number of DCIs detected and received by the terminal in the group common search space is less than the maximum unicast DCI number, the terminal continues detecting and receiving corresponding DCI in a USS according to the second priority order. Until the number of DCIs detected and received within the time unit reaches the maximum unicast DCI number that the terminal supports to detect within the time unit, the terminal stops detecting DCI within the time unit.

In a second manner, the terminal preferentially detects and receives corresponding DCI in a USS, and when a number of DCIs detected and received in the USS is less than the maximum unicast DCI number, i.e., not beyond the terminal capability, the terminal continues detecting and receiving corresponding DCI in a group common search space.

Referring to FIG. 4, which is a schematic flowchart showing a method for detecting downlink control information according to an embodiment, the method may be applied to a terminal, and may include following steps.

In step 401, corresponding DCI is detected and received in a UE search space (USS) according to a second priority order within the time unit.

In embodiments of the present invention, the USS is a search space that corresponds to the terminal and is used for transmitting unicast DCI, and only unicast DCI can be transmitted in the USS. The second priority order may be pre-specified in a protocol, or may be configured by the base station side via a high-layer signaling, and the high-layer signaling may be an RRC signaling.

In step 402, in response to determining that a number of DCIs detected and received in the USS is less than a maximum unicast DCI number, corresponding DCI is detected and received in a group common search space according to a first priority order.

In embodiments of the present invention, the group common search space is a common search space for at least transmitting the group common DCI. If the number of DCIs detected and received by the terminal in the USS does not reach the maximum unicast DCI number, the terminal may continue detecting and receiving the corresponding DCI in the group common search space according to the first priority order, and the DCI detected and received in the group common search space may be unicast DCI or group common DCI. The first priority order may be pre-specified in a protocol, or may be configured by the base station side via a high-layer signaling, and the high-layer signaling may be an RRC signaling.

The step 402 is optionally performed, and it will be performed when the number of DCIs detected and received in the USS does not reach the maximum unicast DCI number.

In step 403, in response to determining that the number of DCIs detected and received within the time unit reaches a maximum DCI number that the terminal supports to detect within the time unit, DCI detection is stopped within the time unit.

In the above-mentioned embodiments, the terminal may preferentially detect and receive corresponding DCI in the USS according to the second priority order, and when the number of DCIs detected and received in the USS is less than the maximum unicast DCI number, the terminal continues detecting and receiving corresponding DCI in the group common search space according to the first priority order, and until it is determined that the number of DCIs detected and received within the time unit reaches the maximum DCI number that the terminal supports to detect within the time unit, the terminal stops detecting DCI within the time. In this way, the purpose that the terminal detects and receives DCIs according to the priority order of multiple DCIs is realized, the case where the behavior of the terminal is unpredictable is avoided, and the method has a high usability.

Optionally, the second priority order is used to indicate at least one of: a priority order of search space identifies from high to low or from low to high; or a priority order of control resource set identities from high to low or from low to high. The first priority order is used to indicate at least one of: a priority order of group common search space identities from high to low or from low to high; a priority order of group-radio network temporary identifier values from high to low or from low to high; a priority order of terminal services; or a priority order of control resource set identities from high to low or from low to high.

In a possible implementation, the second priority order is used to indicate the priority order of search space identifies from high to low or from low to high. The terminal may detect and receive corresponding DCI in a corresponding USS according to the second priority order of the search space identifies from high to low or from low to high. If the number of DCIs detected and received by the terminal in the USS is less than the maximum unicast DCI number, the terminal continues detecting and receiving corresponding DCI in a group common search space according to the first priority order. Until the number of DCIs detected and received within the time unit reaches the maximum unicast DCI number that the terminal supports to detect within the time unit, the terminal stops detecting DCI within the time unit.

The manner in which the terminal detects and receives corresponding DCI in the group common search space according to the first priority order is similar to the manner in which the terminal detects and receives corresponding DCI in the group common search space according to the first priority order as described in the above embodiments, which will not be elaborated here.

In another possible implementation, the second priority order is used to indicate the priority order of control resource set identities from high to low or from low to high. The terminal may detect and receive corresponding DCI in a corresponding USS according to the second priority order of control resource set identities from high to low or from low to high. If the number of DCIs detected and received by the terminal in the USS is less than the maximum unicast DCI number, the terminal continues detecting and receiving corresponding DCI in the group common search space according to the first priority order. Until the number of DCIs detected and received within the time unit reaches the maximum unicast DCI number that the terminal supports to detect within the time unit, the terminal stops detecting DCI within the time unit.

The manner in which the terminal detects and receives corresponding DCI in the group common search space according to the first priority order is similar to the manner in which the terminal detects and receives corresponding DCI in the group common search space according to the first priority order as described in the above embodiments, which will not be elaborated here.

In some optional embodiments, in the case of receiving and receiving DCI using the first manner or the second manner above, the group common DCI detected and received by the terminal in the group common search space, i.e., the group common DCI, can be regarded as unicast downlink DCI. That is to say, when the terminal counts unicast downlink DCIs received, it can count the group common DCI received by the terminal in the group common search space together with the unicast downlink DCI received by the terminal to jointly determine the number of unicast downlink DCIs that the terminal can process.

In embodiments of the present invention, the unicast downlink DCI may be DCI for scheduling a unicast physical downlink shared channel (PDSCH). Unicast uplink DCI may be DCI for scheduling a unicast physical uplink shared channel (PUSCH).

In the above embodiments, the terminal preferentially detects and receives corresponding DCI in the group common search space, or the terminal preferentially detects and receives corresponding DCI in the USS. In both cases, the group common DCI detected and received by the terminal in the group common search space can be regarded as unicast downlink DCI, which avoids affecting the transmission of the unicast uplink DCI on the terminal side, and the method has high availability.

In some optional embodiments, a new terminal capability may also be independently defined for the terminal, and the terminal capability is used to indicate a maximum group common DCI number that the terminal supports to detect within a time unit. That is, when determining the maximum DCI number, the maximum unicast DCI number is no longer reused, and the maximum group common DCI number is independently defined for the terminal.

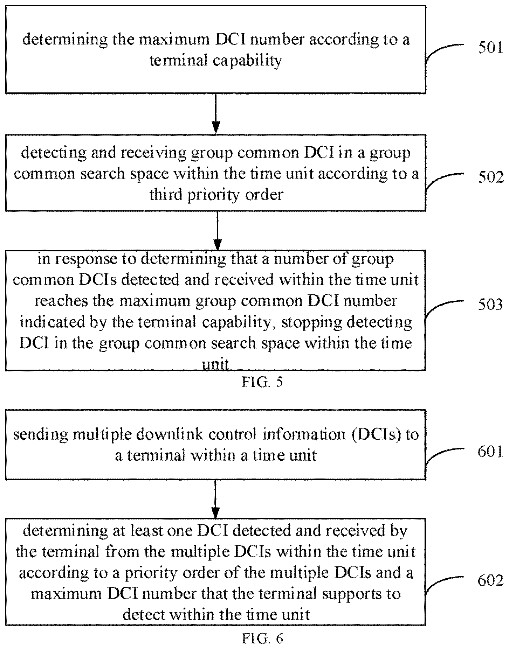

Referring to FIG. 5, which is a schematic flowchart showing a method for detecting downlink control information according to an embodiment, the method may be applied to a terminal, and may include following steps.

In step 501, the maximum DCI number is determined according to a terminal capability.

In embodiments of the present invention, the terminal capability is used to indicate a maximum group common DCI number that the terminal supports to detect within the time unit. Further, terminal capability may be defined according to different serving cells. That is, the maximum group common DCI number that the terminal supports to detect within the time unit in a serving cell is defined for the terminal. For a terminal that does not support the FG 3-5b capability, the corresponding time unit is a slot in size, and for a terminal that supports the FG 3-5b capability, the corresponding time unit is a span in size.

In step 502, group common DCI is detected and received in a group common search space within the time unit according to a third priority order.

The group common search space is a common search space for at least transmitting the group common DCI. Optionally, the third priority order is used to indicate at least one of: a priority order of group common search space identities from high to low or from low to high; a priority order of group-radio network temporary identifier values from high to low or from low to high; a priority order of terminal services; or a priority order of control resource set identities from high to low or from low to high. The third priority order may be pre-specified by a protocol, or may be configured by a high-layer signaling sent by the base station, and the high-layer signaling may be an RRC signaling.

In embodiments of the present invention, the manner in which the terminal detects and receives the group common DCI in the group common search space according to the third priority order is similar to the manner in which the terminal detects and receives corresponding DCI in the group common search space according to the first priority order as described in the above embodiments, which will not be elaborated here.

In step 503, in response to determining that a number of group common DCIs detected and received within the time unit reaches the maximum group common DCI number indicated by the terminal capability, DCI detection is stopped in the group common search space within the time unit.

In the above embodiments, the new terminal capability may be defined for the terminal, and the maximum group common DCI number is determined according to the terminal capability. The terminal detects and receives the group common DCI in the group common search space according to the third priority order, until the number of group common DCIs detected and received reaches the maximum group common DCI number, the DCI detection is stopped in the group common search space within the time unit. Also, the purpose that the terminal detects and receives DCIs according to the priority order of multiple DCIs is realized, the case where the behavior of the terminal is unpredictable is avoided, and the method has a high usability.

In some optional embodiments, the terminal capability in the present invention may share the capability for processing unicast DCIs. In other words, a sum of the maximum group common DCI number indicated by the terminal capability and the number of unicast DCIs detected and received by the terminal within the time unit will not exceed the maximum unicast DCI number that the terminal supports to detect in the time unit, i.e., will not exceed the current capability of the terminal to process unicast DCIs.

For example, if the terminal supports FG 3-1 and works in a FDD frequency band, the number of unicast DCIs that the terminal can process in a time unit, such as in a slot, includes 1 unicast downlink DCI and 1 unicast uplink DCI, so the maximum unicast DCI number is 2. Assuming that the terminal reports the terminal capability to the base station, and the terminal capability indicates that the maximum group common DCI number that the terminal supports to detect in a slot is N, the number of unicast DCIs that the terminal can process in a slot is 2-N.

In the above embodiments, the sum of the maximum group common DCI number indicated by the terminal capability and the number of unicast DCIs detected and received by the terminal within the time unit is less than or equal to the maximum unicast DCI number, so that the capability of the terminal to process unicast DCIs is considered, the purpose that the terminal detects and receives DCIs according to the priority order of multiple DCIs is realized, and the case where the behavior of the terminal is unpredictable is avoided.

Next, the method for sending downlink control information provided in the present invention will be introduced from the base station side.

Embodiments of the present invention provide a method for sending downlink control information, as shown in FIG. 6, which is a schematic flowchart showing a method for sending downlink control information according to an embodiment, the method may be applied to a base station, and may include the following steps.

In step 601, multiple DCIs are sent to a terminal within a time unit.

The multiple DCIs at least include group common DCI for simultaneously scheduling terminal services of multiple terminals. In embodiments of the present invention, a terminal service may refer to an MBS service or other services, which is not limited in the present invention.

In step 602, at least one DCI detected and received by the terminal from the multiple DCIs within the time unit is determined according to a priority order of the multiple DCIs and a maximum DCI number that the terminal supports to detect within the time unit.

In embodiments of the present invention, the priority order may be pre-specified by a protocol, or configured by the base station via a high-layer signaling, and the high-layer signaling may be an RRC signaling.

In the above embodiments, in a case where the base station sends multiple DCIs to the terminal within a time unit, the base station may determine the DCI(s) detected and received by the terminal according to the priority order of the multiple DCIs and the maximum DCI number that the terminal supports to detect within the time unit. In this way, both the terminal and the base station can accurately determine the DCI(s) detected and received by the terminal, avoiding the problem that the behavior of the terminal is unpredictable, and avoiding the degradation of the system performance.

In some optional embodiments, the terminal side regards group common DCI as unicast DCI, and the number of DCIs detected and received is determined according to the group common DCI together with the unicast DCI. Correspondingly, the maximum DCI number may reuse a maximum unicast DCI number defined in a related protocol.

In a first manner, the terminal preferentially detects and receives corresponding DCI in a group common search space, and when a number of DCIs detected and received in the group common search space is less than the maximum unicast DCI number, i.e., not beyond the terminal capability, the terminal continues detecting and receiving corresponding DCI in a UE search space. The base station may send DCIs and determine specific DCI received by the terminal within a time unit in the following manner.

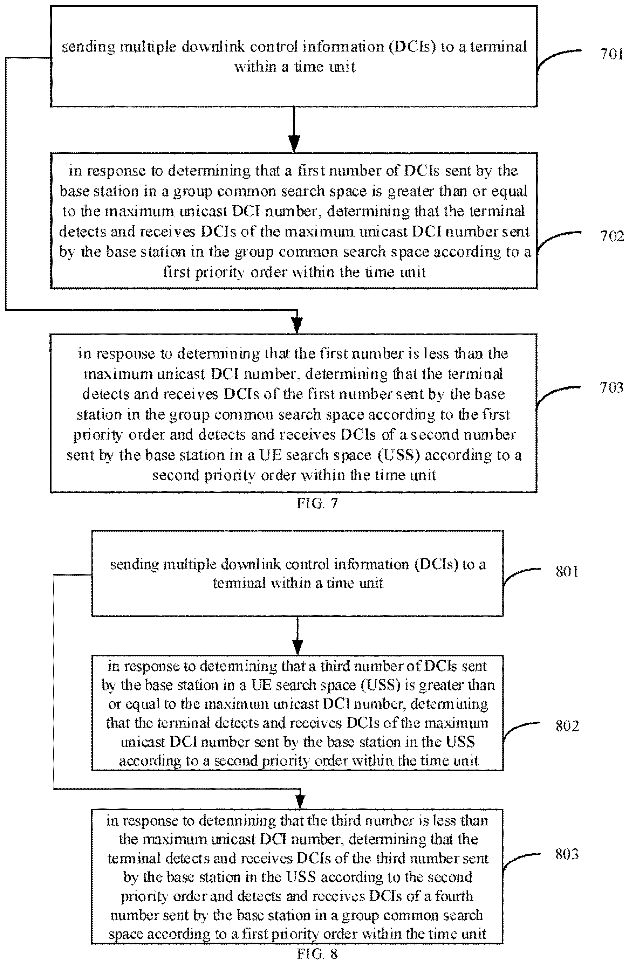

Referring to FIG. 7, which is a schematic flowchart showing a method for sending downlink control information according to an embodiment, the method may be applied to a base station, and may include following steps.

In step 701, multiple DCIs are sent to a terminal within a time unit.

The multiple DCIs at least include group common DCI for simultaneously scheduling terminal services of multiple terminals.

In step 702, in response to determining that a first number of DCIs sent by the base station in a group common search space is greater than or equal to the maximum unicast DCI number, it is determined that the terminal detects and receives DCIs of the maximum unicast DCI number sent by the base station in the group common search space according to a first priority order within the time unit.

The group common search space is a common search space for at least transmitting group common DCI.

In embodiments of the present invention, if the first number of DCIs sent by the base station in the group common search space has reached or even exceeded the terminal capability, that is, the first number is greater than or equal to the maximum unicast DCI number, the base station determines that the terminal will detect and receive DCIs of the maximum unicast DCI number sent by the base station in the group common search space according to the first priority order within the time unit.

Optionally, the first priority order is used to indicate at least one of: a priority order of group common search space identities from high to low or from low to high; a priority order of group-radio network temporary identifier values from high to low or from low to high; a priority order of terminal services; or a priority order of control resource set identities from high to low or from low to high. The first priority order may be specified by a protocol, or configured by the base station via an RRC signaling.

In step 703, in response to determining that the first number is less than the maximum unicast DCI number, it is determined that the terminal detects and receives DCIs of the first number sent by the base station in the group common search space according to the first priority order and detects and receives DCIs of a second number sent by the base station in a UE search space (USS) according to a second priority order within the time unit.

The USS is a search space that corresponds to the terminal and is used for transmitting unicast DCI, and a sum of the first number and the second number is equal to the maximum unicast DCI number.

In embodiments of the present invention, if the base station determines that the first number of DCIs sent in the group common search space does not exceed the terminal capability, that is, the first number is less than the maximum unicast DCI number, the base station determines that the terminal will detect and receive DCIs of the first number sent by the base station in the group common search space according to the first priority order and detect and receive DCIs of the second number sent by the base station in the UE search space (USS) according to the second priority order within the time unit. The sum of the first number and the second number is equal to the maximum unicast DCI number.

The first priority order is used to indicate at least one of: a priority order of group common search space identities from high to low or from low to high; a priority order of group-radio network temporary identifier values from high to low or from low to high; a priority order of terminal services; or a priority order of control resource set identities from high to low or from low to high. The second priority order is used to indicate at least one of: a priority order of search space identifies from high to low or from low to high; or a priority order of control resource set identities from high to low or from low to high. The first priority order and/or the second priority order may be specified by a protocol, or configured by the base station via an RRC signaling.

In the above embodiments, the base station may determine the DCI(s) detected and received by the terminal from the multiple DCIs according to the priority order of multiple DCIs and the maximum unicast DCI number that the terminal supports to detect. In this way, both the terminal and the base station can accurately determine the DCI(s) detected and received by the terminal, avoiding the problem that the behavior of the terminal is unpredictable, and avoiding the degradation of the system performance.

In a second manner, the terminal preferentially detects and receives corresponding DCI in a USS, and when a number of DCIs detected and received in the USS is less than the maximum unicast DCI number, i.e., not beyond the terminal capability, the terminal continues detecting and receiving corresponding DCI in a group common search space. The base station may send DCIs and determine specific DCI received by the terminal within a time unit in the following manner.

Referring to FIG. 8, which is a schematic flowchart showing a method for sending downlink control information according to an embodiment, the method may be applied to a base station, and may include following steps.

In step 801, multiple DCIs are sent to a terminal within a time unit.

The multiple DCIs at least include group common DCI for simultaneously scheduling terminal services of multiple terminals.

In step 802, in response to determining that a third number of DCIs sent by the base station in a UE search space (USS) is greater than or equal to the maximum unicast DCI number, it is determined that the terminal detects and receives DCIs of the maximum unicast DCI number sent by the base station in the USS according to a second priority order within the time unit.

The USS is a search space that corresponds to the terminal and is used for transmitting unicast DCI.

In embodiments of the present invention, if the third number of DCIs sent by the base station in the USS has reached or even exceeded the terminal capability, that is, the third number is greater than or equal to the maximum unicast DCI number, the base station determines that the terminal will detect and receive DCIs of the maximum unicast DCI number sent by the base station in the USS according to the second priority order within the time unit.

Optionally, the second priority order is used to indicate at least one of: a priority order of search space identifies from high to low or from low to high; or a priority order of control resource set identities from high to low or from low to high. The second priority order may be specified by a protocol, or configured by the base station via an RRC signaling.

In step 803, in response to determining that the third number is less than the maximum unicast DCI number, it is determined that the terminal detects and receives DCIs of the third number sent by the base station in the USS according to the second priority order and detects and receives DCIs of a fourth number sent by the base station in a group common search space according to a first priority order within the time unit.

The group common search space is a common search space for at least transmitting group common DCI, and a sum of the third number and the fourth number is equal to the maximum unicast DCI number.

In embodiments of the present invention, if the base station determines that the third number of DCIs sent in the USS does not exceed the terminal capability, that is, the third number is less than the maximum unicast DCI number, the base station determines that the terminal will detect and receive DCIs of the third number sent by the base station in the USS according to the second priority order and detect and receive DCIs of the fourth number sent by the base station in the group common search space according to the first priority order within the time unit. The sum of the third number and the fourth number is equal to the maximum unicast DCI number.

The first priority order is used to indicate at least one of: a priority order of group common search space identities from high to low or from low to high; a priority order of group-radio network temporary identifier values from high to low or from low to high; a priority order of terminal services; or a priority order of control resource set identities from high to low or from low to high. The second priority order is used to indicate at least one of: a priority order of search space identifies from high to low or from low to high; or a priority order of control resource set identities from high to low or from low to high. The first priority order and/or the second priority order may be specified by a protocol, or configured by the base station via an RRC signaling.

In the above embodiments, the base station may determine the DCI(s) detected and received by the terminal from the multiple DCIs according to the priority order of multiple DCIs and the maximum unicast DCI number that the terminal supports to detect. In this way, both the terminal and the base station can accurately determine the DCI(s) detected and received by the terminal, avoiding the problem that the behavior of the terminal is unpredictable, and avoiding the degradation of the system performance.

In some optional embodiments, at least one of the first priority order and the second priority order may be configured by the base station via a high-layer signaling, and the high-layer signaling may be an RRC signaling.

Of course, at least one of the first priority order and the second priority order may not be configured by the base station, and determined by the terminal and the base station according to a protocol respectively.

In the foregoing embodiments, the base station may configure at least one of the first priority order and the second priority order via a high-layer signaling, which is simple to implement and has high usability.

In some optional embodiments, for the above-mentioned first manner or second manner, the group common DCI sent by the base station to the terminal in the group common search space is regarded as unicast downlink DCI, that is, both the base station and the terminal can regard the group common DCI transmitted in the group common search space as the unicast downlink DCI, so that the base station side and the terminal side have the same understanding on DCI transmission and reception, and effects on the transmission of the unicast uplink DCI are avoided.

In embodiments of the present invention, the unicast downlink DCI may be DCI used to schedule a unicast PDSCH. The unicast uplink DCI may be DCI for scheduling unicast PUSCH. In some optional embodiments, a new terminal capability may be defined for the terminal, and the terminal capability is used to indicate a maximum group common DCI number that the terminal supports to detect within a time unit. Further, the terminal capability is used to indicate the maximum group common DCI number that the terminal supports to detect within a time unit in a serving cell. The base station may send DCIs and determine specific DCI received by the terminal within a time unit in the following manner.

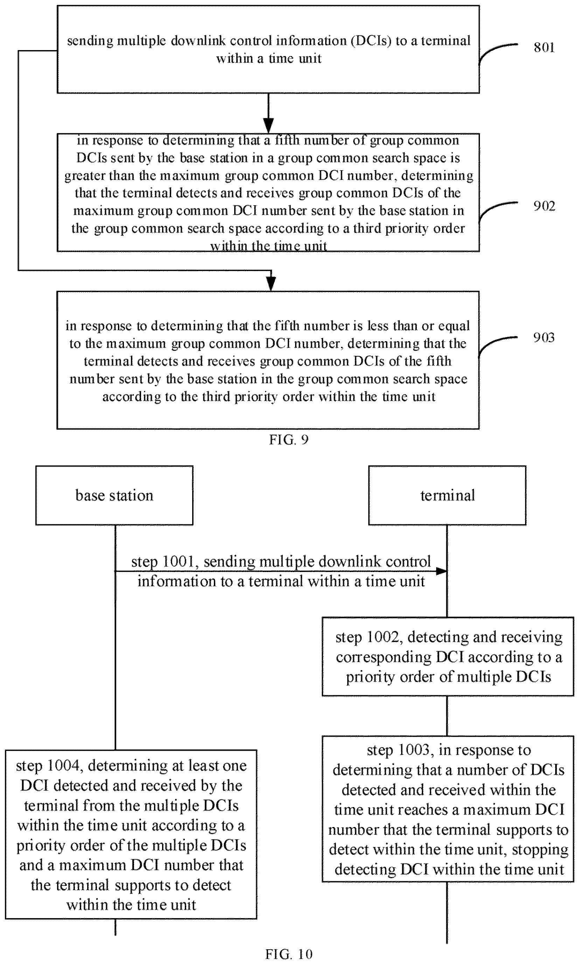

Referring to FIG. 9, which is a schematic flowchart showing a method for sending downlink control information according to an embodiment, the method may be applied to a base station, and may include following steps.

In step 901, multiple DCIs are sent to a terminal within a time unit.

The multiple DCIs at least include group common DCI for simultaneously scheduling terminal services of multiple terminals.

In step 902, in response to determining that a fifth number of group common DCIs sent by the base station in a group common search space is greater than the maximum group common DCI number, it is determined that the terminal detects and receives group common DCIs of the maximum group common DCI number sent by the base station in the group common search space according to a third priority order within the time unit.

The group common search space is a common search space for at least transmitting the group common DCI. The third priority order is used to indicate at least one of: a priority order of group common search space identities from high to low or from low to high; a priority order of group-radio network temporary identifier values from high to low or from low to high; a priority order of terminal services; or a priority order of control resource set identities from high to low or from low to high. The third priority order may be configured by the base station via an RRC signaling, or pre-specified by a protocol.

In embodiments of the present invention, if the fifth number of DCIs sent by the base station in the group common search space has reached or even exceeded the terminal capability, that is, the fifth number is greater than or equal to the maximum group common DCI number, the base station determines that the terminal will detect and receive group common DCIs of the maximum group common DCI number sent by the base station in the group common search space according to the third priority order within the time unit.

In step 903, in response to determining that the fifth number is less than or equal to the maximum group common DCI number, it is determined that the terminal detects and receives group common DCIs of the fifth number sent by the base station in the group common search space according to the third priority order within the time unit.

In embodiments of the present invention, if the fifth number of DCIs sent by the base station in the group common search space does not reach the terminal capability, that is, the fifth number is smaller than the maximum group common DCI number, the base station determines that the terminal will detect and receive group common DCIs of the fifth number sent by the base station in the group common search space according to the third priority order within the time unit.

In the above embodiments, the base station may determine the DCI(s) detected and received by the terminal from the multiple DCIs according to the priority order of multiple DCIs and the maximum group common DCI number indicated by the terminal capability. In this way, both the terminal and the base station can accurately determine the DCI(s) detected and received by the terminal, avoiding the problem that the behavior of the terminal is unpredictable, and avoiding the degradation of the system performance.

In some optional embodiments, a sum of the maximum group common DCI number indicated by the terminal capability and a number of unicast DCIs sent by the base station to the terminal within the time unit may be less than or equal to a maximum unicast DCI number that the terminal supports to detect within the time unit.

In the above embodiments, the sum of the maximum group common DCI number indicated by the terminal capability and the number of unicast DCIs sent by the base station to the terminal within the time unit is less than or equal to the maximum unicast DCI number that the terminal supports to detect within the time unit, so that the capability of the terminal to process unicast DCIs is considered, the purpose that the terminal detects and receives DCIs according to the priority order of multiple DCIs is realized, and the case where the behavior of the terminal is unpredictable is avoided.

It should also be noted that, for the base station, if it is determined that the number of multiple DCIs to be sent to the terminal within a certain time unit exceeds the terminal capability, that is, it exceeds the maximum DCI number that the terminal supports to detect within a time unit, the terminal may determine at least one target DCI from the multiple DCIs based on the priority order of the multiple DCIs and the maximum DCI number, and send the at least one target DCI to the terminal, where the number of the at least one target DCI is equal to the maximum DCI number.

In a possible implementation, in a case where the maximum DCI number is the maximum unicast DCI number, when the base station determines that the first number of DCIs to be sent in the group common search space is greater than or equal to the maximum unicast DCI number, the base station may determine DCIs of the maximum unicast DCI number to be sent in the group common search space according to the first priority order, and send these DCIs to the terminal as target DCIs.

If the first number is less than the maximum unicast DCI number, the base station may determine that the target DCIs to be sent to the terminal include DCIs of the first number to be sent in the group common search space and DCIs of the second number to be sent in the USS. The USS is a search space that corresponds to the terminal and is used for transmitting unicast DCI, and the sum of the first number and the second number is equal to the maximum unicast DCI number.

In another possible implementation, in a case where the maximum DCI number is the maximum unicast DCI number, when the base station determines that the third number of DCIs to be sent in the USS is greater than or equal to the maximum unicast DCI number, the base station may determine DCIs of the maximum unicast DCI number to be sent in the USS according to the second priority order, and send these DCIs to the terminal as target DCIs.

If the third number is less than the maximum unicast DCI number, the base station may determine that target DCIs to be sent to the terminal include DCIs of third number to be sent in the USS and DCIs of the fourth number to be sent in the group common search space. The group common search space is a common search space for at least transmitting group common DCI, and the sum of the third number and the fourth number is equal to the maximum unicast DCI number.

In another optional implementation, if the maximum DCI number is the maximum group common DCI number determined according to the terminal capability, when the base station determines that the fifth number of group common DCIs to be sent in the group common search space is greater than the maximum group common DCI number, the base station may determine target DCIs of the maximum group common DCI numbers to be sent in the group common search space according to the third priority order. The group common search space is a common search space for at least transmitting the group common DCI. The base station sends the target DCIs of the maximum group common DCI number to the terminal.

If the fifth number is less than or equal to the maximum group common DCI number, the group common DCIs of the fifth number are used as the target DCIs and sent to the terminal.

The first priority order is used to indicate at least one of: a priority order of group common search space identities from high to low or from low to high; a priority order of group-radio network temporary identifier values from high to low or from low to high; a priority order of terminal services; or a priority order of control resource set identities from high to low or from low to high. The second priority order is used to indicate at least one of: a priority order of search space identifies from high to low or from low to high; or a priority order of control resource set identities from high to low or from low to high. The third priority order is used to indicate at least one of: a priority order of group common search space identities from high to low or from low to high; a priority order of group-radio network temporary identifier values from high to low or from low to high; a priority order of terminal services; or a priority order of control resource set identities from high to low or from low to high.

At least one of the first priority order, the second priority order and the third priority order may be specified in a protocol, or configured by the base station via an RRC signaling.

In the above embodiments, the base station can send the target DCI(s) from the multiple DCIs to the terminal according to the priority order of the multiple DCIs and the maximum DCI number that the terminal supports to detect within a time unit, so as to avoid sending invalid DCI, thereby reducing energy consumption and resource overhead.

In some optional embodiments, refer to FIG. 10, which is a schematic flowchart showing a method for sending and detecting downlink control information according to an embodiment, the method may include following steps.

In step 1001, a base station sends multiple downlink control information (DCIs) to a terminal within a time unit.

The multiple DCIs at least include group common DCI for simultaneously scheduling terminal services of multiple terminals

In step 1002, the terminal detects and receives corresponding DCI according to the priority order of the multiple DCIs.

In step 1003, in response to determining that a number of DCIs detected and received within the time unit reaches a maximum DCI number that the terminal supports to detect within the time unit, the terminal stops detecting DCI within the time unit.

In step 1004, the base station determines at least one DCI detected and received by the terminal from the multiple DCIs within the time unit according to the priority order of the multiple DCIs and the maximum DCI number that the terminal supports to detect within the time unit.

In the above embodiments, the terminal is able to detect and receive DCI within a time unit according to the priority order of multiple DCIs, and the base station is also able to determine at least one DCI detected and received by the terminal from the multiple DCIs within the time unit according to the priority order of the multiple DCIs and the maximum DCI number that the terminal supports to detect within a time unit. In the present invention, in the case where the number of DCIs to be received by the terminal within a time unit exceeds the maximum DCI number supported by the terminal, both the terminal and the base station can accurately determine the DCI detected and received by the terminal, thereby avoiding the problem that the behavior of the terminal is unpredictable, so that the terminal and the base station have a consistent understanding on the data transmission and reception, avoiding degradation of the system performance.

In the following, the process for detecting downlink control information as described above will be further illustrated with reference to examples.

It is assumed that the terminal is a terminal having an MBS capability and supports unicast data transmission. Assuming that the PDCCH monitoring capability supported by the terminal is FG 3-1, which is a required capability for the terminal, and its capability for monitoring the PDCCH indicates that the terminal can only detect two downlink unicast DCIs in a slot.

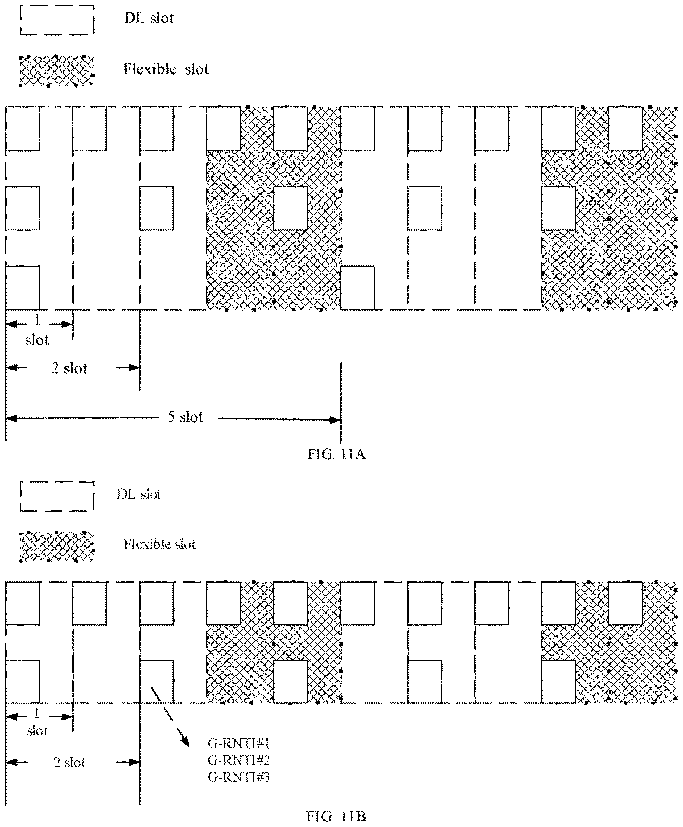

Referring to FIG. 11A, it is assumed that when counting DCIs detected and received, the terminal regards group common DCI as unicast DCI, and count it in the number of DCIs detected and received together with the unicast DCI. In this embodiment, it is assumed that an upper limit of the capability of the terminal for detecting DCIs is 2 unicast DCIs.

In this embodiment, it is assumed that the base station configures N CSSs having different periods for the terminal to transmit and schedule group common DCIs of different MBS services. It is assumed that MBS DCIs transmitted in different CSSs are scrambled with different RNTI values. At the same time, it is assumed that a USS transmission period configured by the network side for the terminal is one slot, with a specific schematic diagram is shown in FIG. 11A.

In a slot where different search spaces conflict in the time domain, the terminal needs to detect and receive DCI according to its own capability and a certain monitoring order. In this embodiment of the present invention, the method of the present invention is described with reference to an example where the terminal processes DCIs in slot#0. In slot#0, there are 3 search space configurations, i.e., USS, CSS#1 and CSS#2. The terminal side performs DCI detection and reception according to the following method.

The terminal first detects and receives group common DCI in CSS#1 and CSS#2, and continues detecting and receiving DCI in the USS only when the number of DCIs received in all CSSs is less than 2. In this slot, the terminal needs to detect multiple CSSs. When detecting and receiving DCI in CSSs, the terminal needs to perform DCI detection and reception according to the following steps.

The terminal preferentially detects and receives the group common DCI in a search space with a smaller search space ID according to group common search space IDs. In this embodiment, the terminal first detects and receives DCI in CSS#1, and if the terminal capability is not exceeded, the terminal continues detecting and receiving DCI in CSS#2.

After the terminal finishes the DCI detection and reception in CSS#1 and CSS#2, if the number of DCIs received has not reached the terminal capability, the terminal continues detecting and receiving DCI in the USS.

Optionally, the base station may send DCIs according to a related technology, and determine the specific DCI received by the terminal with the method provided in the present invention. Alternatively, when the base station sends DCIs, it can avoid sending invalid DCI, thereby avoiding the waste of energy and reducing resource overhead. For another example, referring to FIG. 11A, when detecting DCIs in the CSSs, the UE determines the order of detecting and receiving DCIs according to the RNTI values. In this embodiment, the terminal may determine the order of detecting and receiving DCIs according to the following rules.

According to the order of RNTI values, the terminal first detects and receives DCI in a CSS with a larger RNTI value. For example, CSS#1 is configured with a larger G-RNTI value, and CSS#2 is configured with a smaller G-RNTI value. The terminal first detects and receives DCI in CSS#1. If the number of DCIs received at this time does not exceed the terminal capability, the terminal continues detecting and receiving DCI in CSS#2.

Alternatively, DCIs are detected and received in the order of RNTI values from small to large.

Alternatively, according to an arrangement order of RNTIs configured by the network side, DCIs are detected and received in corresponding CSSs in accordance with this order.

The group common DCI transmitted in the group common search space may be regarded by the terminal and the base station as unicast downlink DCI.

For another example, as shown in FIG. 11B, it is assumed that a CSS may be configured with multiple G-RNTIs, that is, the terminal needs to detect and receive DCIs in CSS#1 according to multiple G-RNTIs. When detecting DCIs in CSS# 1, the terminal determines the order of detecting and receiving DCIs according to the order of RNTI values. In this embodiment, the terminal may determine the order of detecting and receiving DCIs according to the following rules.

According to the order of RNTI values, the terminal first detects and receives DCI in a CSS with a larger RNTI value. For example, CSS#1 is configured with a larger G-RNTI value, and CSS#2 is configured with a smaller G-RNTI value. The terminal first detects and receives DCI in CSS#1. If the number of DCIs received at this time does not exceed the terminal capability, the terminal continues detecting and receiving DCI in CSS#2.

Alternatively, DCIs are detected and received in the order of RNTI values from small to large.

Alternatively, according to an arrangement order of RNTIs configured by the network side, DCIs are detected and received in corresponding CSSs in accordance with this order.

If there are multiple CSSs, and each CSS corresponds to multiple G-RNTIs, the terminal may first detect CSS#1 in the order of search space identifiers from low to high or from high to low, and in CSS#1, the terminal detects and receives DCIs sequentially in the order of G-RNTIs from high to low.

The group common DCI transmitted in the group common search space may be regarded by the terminal and the base station as unicast downlink DCI.

For another example, referring to FIG. 11A, the terminal detects and receives corresponding DCI according to the priority order of terminal services, and the first priority order may be configured by the base station via a high-layer signaling. The physical layer of the terminal is able to determine the corresponding service according to parameters like search space, RNTI, and monitoring period.

When sending DCIs, the base station may consider the above method, so as to avoid sending invalid DCI, avoid the waste of energy, and reduce resource overhead.

For another example, referring to FIG. 11A, when the terminal detects and receives a unicast PDCCH and a group common PDCCH in the same slot, the terminal detects DCIs according to the order of CORESET IDs. In this embodiment, the terminal preferentially detects a CSS transmitted in a CORESET with a lower serial number.

When sending DCIs, the base station may consider the above method, so as to avoid sending invalid DCI, avoid the waste of energy, and reduce resource overhead.

For another example, when sending DCIs, the base station may send DCIs based on a relevant mechanism. In other words, the base station does not consider the priority of DCI s. The method for detecting downlink control information provided in the present invention is implemented only at the terminal side.

For another example, when detecting and receiving DCI, the terminal side preferentially detects the USS. If there are multiple USSs or the number of DCIs to be detected and received in the USS exceeds the maximum capability supported by the terminal, the terminal first detects and receives DCI in the USS in the following order:
detecting and receiving the DCI according to serial numbers of search spaces; or
preferentially detecting and receiving the DCI in a CORESET with a smaller CORESET ID according to the order of CORESET IDs.

After completing the detection in the USS, if the number of DCIs detected and received does not exceed the terminal capability, the terminal continues detecting and receiving DCI in the CSS by using the following detecting order and rule, until the number of DCIs detected and received reaches the terminal capability:
preferentially detecting and receiving group common DCI in a search space with a lower search space ID according to group common search space IDs, or
detecting and receiving the group common DCI in the order of RNTIs, or
detecting and receiving the group common DCI in the order of services, or
preferentially detecting and receiving the group common DCI in a CORESET with a lower CORESET ID according to the order of CORESET IDs.

The group common DCI transmitted in the group common search space may be regarded by the terminal and the base station as unicast downlink DCI.

For another example, in this embodiment, a new capability is defined for the terminal, which defines the maximum number of MBS DCIs supported by the terminal within a time unit in a serving cell. This capability is independent of the currently defined terminal capability, and is an additional capability supported by the terminal on the basis of the current capability. The time unit is a slot or a span, which is not limited in this embodiment.

Based on the capability, the terminal detects and receives the group common DCI in the following order:
preferentially detecting and receiving the group common DCI in a search space with a lower search space ID according to group common search space IDs, or
detecting and receiving the group common DCI in the order of RNTIs, or
detecting and receiving the group common DCI in the order of services, or
preferentially detecting and receiving the group common DCI in a CORESET with a lower CORESET ID according to the order of CORESET IDs.

The sum of the maximum group common DCI number indicated by the terminal capability and the number of unicast DCIs detected and received by the terminal within a time unit does not exceed the maximum unicast DCI number that the terminal supports to detect within a time unit.

Corresponding to the foregoing embodiments of the method for implementing application functions, the present invention also provides embodiments of apparatuses for implementing application functions.

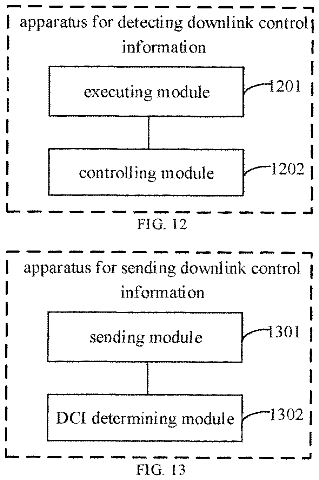

Referring to FIG. 12, which is a schematic block diagram showing an apparatus for detecting downlink control information according to an illustrative embodiment, the apparatus is applied to a terminal, and includes an executing module 1201 and a controlling module 1202. The executing module 1201 is configured to detect and receive corresponding downlink control information (DCI) according to a priority order of multiple DCIs within a time unit. The multiple DCIs at least include group common DCI for simultaneously scheduling terminal services of multiple terminals. The controlling module 1202 is configured to stop detecting DCI within the time unit, in response to determining that a number of DCIs detected and received within the time unit reaches a maximum DCI number that the terminal supports to detect within the time unit.

In some optional embodiments, the maximum DCI number is a maximum unicast DCI number. The executing module includes: a first executing sub-module and a second executing sub-module. The first executing sub-module is configured to detect and receive corresponding DCI in a group common search space according to a first priority order within the time unit. The group common search space is a common search space for at least transmitting the group common DCI. The second executing sub-module is configured to: detect and receive corresponding DCI in a UE search space (USS) according to a second priority order, in response to determining that a number of DCIs detected and received in the group common search space is less than the maximum unicast DCI number. The USS is a search space that corresponds to the terminal and is used for transmitting unicast DCI.

In some optional embodiments, the maximum DCI number is a maximum unicast DCI number. The executing module includes: a third executing sub-module and a fourth executing sub-module. The third executing sub-module is configured to detect and receive corresponding DCI in a UE search space (USS) according to a second priority order within the time unit. The USS is a search space that corresponds to the terminal and is used for transmitting unicast DCI. The fourth executing sub-module is configured to detect and receive corresponding DCI in a group common search space according to a first priority order, in response to determining that a number of DCIs detected and received in the USS is less than the maximum unicast DCI number. The group common search space is a common search space for at least transmitting the group common DCI.

In some optional embodiments, the first priority order is used to indicate at least one of: a priority order of group common search space identities from high to low or from low to high; a priority order of group-radio network temporary identifier values from high to low or from low to high; a priority order of terminal services; or a priority order of control resource set identities from high to low or from low to high.

In some optional embodiments, the second priority order is used to indicate at least one of: a priority order of search space identifies from high to low or from low to high; or a priority order of control resource set identities from high to low or from low to high.

In some optional embodiments, the apparatus further includes any of: a first determining module; or a second determining module. The first determining module is configured to determine the first priority order according to a protocol. The second determining module is configured to determine the first priority order according to a radio resource control (RRC) signaling sent by a base station.

In some optional embodiments, the apparatus further includes any of: a third determining module; or a fourth determining module. The third determining module is configured to determine the second priority order according to a protocol. The fourth determining module is configured to determine the second priority order according to a radio resource control (RRC) signaling sent by a base station.

In some optional embodiments, the group common DCI detected and received in the group common search space is regarded as unicast downlink DCI.

In some optional embodiments, the apparatus further includes a fifth determining module. The fifth determining module is configured to determine the maximum DCI number according to a terminal capability. The terminal capability is used to indicate a maximum group common DCI number that the terminal supports to detect within the time unit.

In some optional embodiments, the terminal capability is used to indicate the maximum group common DCI number that the terminal supports to detect within the time unit in a serving cell.

In some optional embodiments, the executing module includes: a fifth executing sub-module. The fifth executing sub-module is configured to detect and receive group common DCI in a group common search space within the time unit according to a third priority order. The group common search space is a common search space for at least transmitting the group common DCI.

The controlling module includes: a controlling sub-module. The controlling sub-module is configured to stop detecting DCI in the group common search space within the time unit, in response to determining that a number of group common DCIs detected and received within the time unit reaches the maximum group common DCI number indicated by the terminal capability.

In some optional embodiments, the third priority order is used to indicate at least one of: a priority order of group common search space identities from high to low or from low to high; a priority order of group-radio network temporary identifier values from high to low or from low to high; a priority order of terminal services; or a priority order of control resource set identities from high to low or from low to high.

In some optional embodiments, the apparatus further includes any of: a sixth determining module or a seventh determining module. The sixth determining module is configured to determine the third priority order according to a protocol. The seventh determining module is configured to determine the third priority order according to a radio resource control (RRC) signaling sent by a base station.

In some optional embodiments, a sum of the maximum group common DCI number indicated by the terminal capability and a number of unicast DCIs detected and received by the terminal within the time unit is less than or equal to a maximum unicast DCI number that the terminal supports to detect within the time unit.

Referring to FIG. 13, which is a schematic block diagram showing an apparatus for sending downlink control information according to an illustrative embodiment, the apparatus is applied to a base station, and includes a sending module 1301 and a DCI determining module 1302. The sending module 1301 is configured to send multiple downlink control information (DCIs) to a terminal within a time unit. The multiple DCIs at least include group common DCI for simultaneously scheduling terminal services of multiple terminals. The DCI determining module 1302 is configured to determine at least one DCI detected and received by the terminal from the multiple DCIs within the time unit according to a priority order of the multiple DCIs and a maximum DCI number that the terminal supports to detect within the time unit.

In some optional embodiments, the maximum DCI number is a maximum unicast DCI number. The DCI determining module includes a first DCI determining sub-module and a second DCI determining sub-module. The first DCI determining sub-module is configured to determine that the terminal detects and receives DCIs of the maximum unicast DCI number sent by the base station in a group common search space according to a first priority order within the time unit, in response to determining that a first number of DCIs sent by the base station in the group common search space is greater than or equal to the maximum unicast DCI number. The group common search space is a common search space for at least transmitting group common DCI. The second DCI determining sub-module is configured to determine that the terminal detects and receives DCIs of the first number sent by the base station in the group common search space according to the first priority order and detects and receives DCIs of a second number sent by the base station in a UE search space (USS) according to a second priority order within the time unit, in response to determining that the first number is less than the maximum unicast DCI number. The USS is a search space that corresponds to the terminal and is used for transmitting unicast DCI, and a sum of the first number and the second number is equal to the maximum unicast DCI number.

In some optional embodiments, the maximum DCI number is a maximum unicast DCI number. The first DCI determining module includes a third DCI determining sub-module and a fourth DCI determining sub-module. The third DCI determining sub-module is configured to determine that the terminal detects and receives DCIs of the maximum unicast DCI number sent by the base station in a UE search space (USS) according to a second priority order within the time unit, in response to determining that a third number of DCIs sent by the base station in the USS is greater than or equal to the maximum unicast DCI number. The USS is a search space that corresponds to the terminal and is used for transmitting unicast DCI. The fourth DCI determining sub-module is configured to determine that the terminal detects and receives DCIs of the third number sent by the base station in the USS according to the second priority order and detects and receives DCIs of a fourth number sent by the base station in a group common search space according to a first priority order within the time unit, in response to determining that the third number is less than the maximum unicast DCI number. The group common search space is a common search space for at least transmitting group common DCI, and a sum of the third number and the fourth number is equal to the maximum unicast DCI number.

In some optional embodiments, the first priority order is used to indicate at least one of: a priority order of group common search space identities from high to low or from low to high; a priority order of group-radio network temporary identifier values from high to low or from low to high; a priority order of terminal services; or a priority order of control resource set identities from high to low or from low to high.

In some optional embodiments, the second priority order is used to indicate at least one of: a priority order of search space identifies from high to low or from low to high; or a priority order of control resource set identities from high to low or from low to high.

In some optional embodiments, the apparatus further includes: a first sending module. The first sending module is configured to send a radio resource control (RRC) signaling to the terminal. The RRC signaling is used to indicate to the terminal the first priority order and/or the second priority order configured by the base station.

In some optional embodiments, the group common DCI sent to the terminal in the group common search space is regarded as unicast downlink DCI.

In some optional embodiments, the maximum DCI number is a maximum group common DCI number determined according to a terminal capability of the terminal. The DCI determining module further includes a fifth DCI determining sub-module and a sixth DCI determining sub-module. The fifth DCI determining sub-module is configured to determine that the terminal detects and receives group common DCIs of the maximum group common DCI number sent by the base station in a group common search space according to a third priority order within the time unit, in response to determining that a fifth number of group common DCIs sent by the base station in the group common search space is greater than the maximum group common DCI number. The group common search space is a common search space for at least transmitting the group common DCI. The sixth DCI determining sub-module is configured to determine that the terminal detects and receives group common DCIs of the fifth number sent by the base station in the group common search space according to the third priority order within the time unit, in response to determining that the fifth number is less than or equal to the maximum group common DCI number.

In some optional embodiments, the third priority order is used to indicate at least one of: a priority order of group common search space identities from high to low or from low to high; a priority order of group-radio network temporary identifier values from high to low or from low to high; a priority order of terminal services; or a priority order of control resource set identities from high to low or from low to high.

In some optional embodiments, the apparatus further includes: a sending module. The sending module is configured to send a radio resource control (RRC) signaling to the terminal. The RRC signaling is used to indicate to the terminal the third priority order configured by the base station.

In some optional embodiments, a sum of the maximum group common DCI number indicated by the terminal capability and a number of unicast DCIs sent by the base station to the terminal within the time unit is less than or equal to a maximum unicast DCI number that the terminal supports to detect within the time unit.

For apparatus embodiments, since they substantially correspond to the method embodiments, reference is made to the descriptions of the method embodiments for relevant parts. The above-described apparatus embodiments are merely for the purpose of illustration, in which units described as separate components may be or may not be physically separated, and the components displayed as units may be or may not be physical units, that is, either located at one place or distributed onto a plurality of network units. The object of embodiments of the present invention may be achieved by some or all of the modules as required. It would be appreciated and executable by those skilled in the art without creative efforts.

Correspondingly, the present invention also provides a computer-readable storage medium, which has stored therein computer programs for executing the method for detecting downlink control information as described in any embodiment above.

Correspondingly, the present invention also provides a computer-readable storage medium, which has stored therein computer programs for executing the method for sending downlink control information as described in any embodiment above.

Correspondingly, the present invention also provides a device for detecting downlink control information, which includes: a processor; and a memory for storing processor-executable instructions. The processor is configured to perform the method for detecting downlink control information as described in any embodiment above.

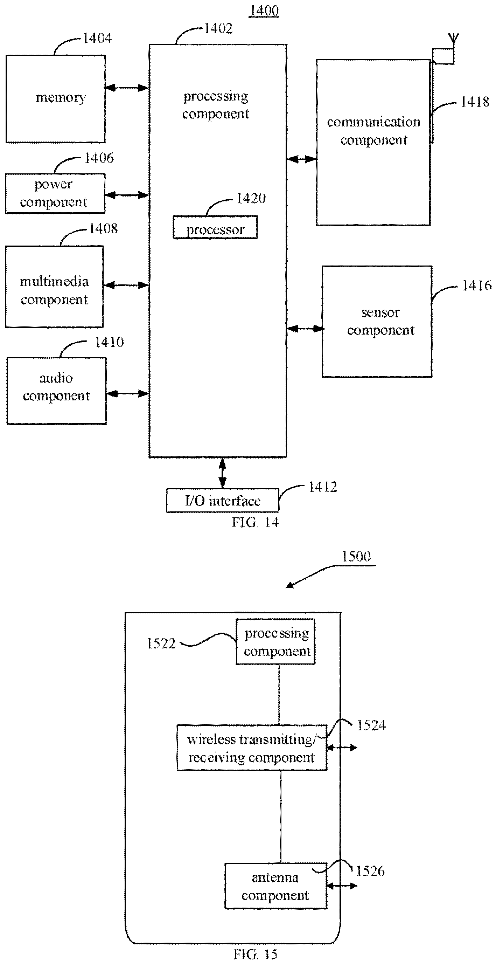

FIG. 14 is a schematic block diagram showing an electronic device 1400 according to an illustrative embodiment. For example, the electronic device 1400 may be a terminal such as a mobile phone, a tablet computer, an e-book reader, a multimedia player, a wearable device, a vehicle-mounted terminal, an ipad, or a smart TV

Referring to FIG. 14, the electronic device 1400 may include one or more of the following components: a processing component 1402, a memory 1404, a power component 1406, a multimedia component 1408, an audio component 1410, an input/output (I/O) interface 1412, a sensor component 1416, and a communication component 1418.

The processing component 1402 typically controls overall operations of the electronic device 1400, such as the operations associated with display, phone calls, data communications, camera operations, and recording operations. The processing component 1402 can include one or more processors 1420 to execute instructions to perform all or some of steps in the method for detecting downlink control information as described above. Moreover, the processing component 1402 may include one or more modules which facilitate the interaction between the processing component 1402 and other components. For instance, the processing component 1402 may include a multimedia module to facilitate the interaction between the multimedia component 1408 and the processing component 1402. For another example, the processing component 1402 may read executable instructions from the memory, so as to implement the steps of the method for detecting downlink control information as described in various embodiments.

The memory 1404 is configured to store various types of data to support the operation of the electronic device 1400. Examples of such data include instructions for any applications or methods operated on the electronic device 1400, contact data, phonebook data, messages, pictures, videos, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the electronic device 1400. The power component 1406 may include a power management system, one or more power sources, and any other components associated with the generation, management, and distribution of power in the electronic device 1400.

The multimedia component 1408 includes a screen providing an output interface between the electronic device 1400 and the user. In some embodiments, the multimedia component 1408 includes a front camera and/or a rear camera. The front camera and/or the rear camera may receive an external multimedia datum while the electronic device 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone (MIC) configured to receive an external audio signal when the electronic device 1400 is in an operation mode, such as a call mode, a recording mode, and a voice recognition mode. The received audio signal may be further stored in the memory 1404 or transmitted via the communication component 1418. In some embodiments, the audio component 1410 further includes a speaker to output audio signals.

The I/O interface 1412 provides an interface between the processing component 1402 and peripheral interface modules, such as keyboards, click wheels, buttons, and the like. The buttons may include, but are not limited to, a home button, a volume button, a starting button, and a locking button.

The sensor component 1416 includes one or more sensors to provide status assessments of various aspects of the electronic device 1400. For instance, the sensor component 1416 may detect an open/closed status of the electronic device 1400, relative positioning of components, e.g., the display and the keypad, of the electronic device 1400, a change in position of the electronic device 1400 or a component of the electronic device 1400, a presence or absence of user contact with the electronic device 1400, an orientation or an acceleration/deceleration of the electronic device 1400, and a change in temperature of the electronic device 1400. The sensor component 1416 may include a proximity sensor configured to detect the presence of nearby objects without any physical contact. The sensor component 1416 may further include a light sensor, such as a CMOS or CCD image sensor, for use in imaging applications. In some embodiments, the sensor component 1416 may further include an accelerometer sensor, a gyroscope sensor, a magnetic sensor, a pressure sensor, or a temperature sensor.

The communication component 1418 is configured to facilitate communication, wired or wireless, between the electronic device 1400 and other devices. The electronic device 1400 can access a wireless network based on a communication standard, such as Wi-Fi, 2G, 3G, 4G, 5G, 6G, or a combination thereof. In an illustrative embodiment, the communication component 1418 receives a broadcast signal or broadcast associated information from an external broadcast management system via a broadcast channel. In an illustrative embodiment, the communication component 1418 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the electronic device 1400 may be implemented with one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic elements, for performing the method for detecting downlink control information as described above.

In an illustrative embodiment, there is also provided a non-transitory machine readable storage medium including instructions, such as included in the memory 1404, executable by the processor 1420 in the electronic device 1400, for completing the method for detecting downlink control information as described above. For example, the non-transitory computer-readable storage medium may be a ROM, a random access memory (RAM), a CD-ROM, a magnetic tape, a floppy disc, an optical data storage device, and the like.

Correspondingly, the present invention also provides a device for sending downlink control information, which includes: a processor; and a memory for storing processor-executable instructions. The processor is configured to perform the method for sending downlink control information as describ ed in any embodiment above.

As shown in FIG. 15, FIG. 15 is a schematic structural diagram showing a device 1500 for sending downlink control information according to an illustrative embodiment. The device 1500 may be provided as a base station. Referring to FIG. 15, the device 1500 includes a processing component 1522, a wireless transmitting/receiving component 1524, an antenna component 1526, and a signal processing part specific to a wireless interface. The processing component 1522 may further include at least one processor.

One of the processors in the processing component 1522 may be configured to execute the method for sending downlink control information as described in any embodiment above.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as illustrative, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. A method for detecting downlink control information, performed by a terminal, comprising:
detecting and receiving corresponding downlink control information (DCI) according to a priority order of multiple DCIs within a time unit; wherein the multiple DCIs at least comprise group common DCI for simultaneously scheduling terminal services of multiple terminals; and
in response to determining that a number of DCIs detected and received within the time unit reaches a maximum DCI number that the terminal supports to detect within the time unit, stopping detecting DCI within the time unit.

2. The method according to claim 1, wherein the maximum DCI number is a maximum unicast DCI number;
detecting and receiving the corresponding DCI according to the priority order of multiple DCIs within the time unit comprises:
detecting and receiving corresponding DCI in a group common search space according to a first priority order within the time unit; wherein the group common search space is a common search space for at least transmitting the group common DCI;
in response to determining that a number of DCIs detected and received in the group common search space is less than the maximum unicast DCI number, detecting and receiving corresponding DCI in a UE search space (USS) according to a second priority order; wherein the USS is a search space that corresponds to the terminal and is used for transmitting unicast DCI.

3. The method according to claim 1, wherein the maximum DCI number is a maximum unicast DCI number;
detecting and receiving the corresponding DCI according to the priority order of multiple DCIs within the time unit comprises:
detecting and receiving corresponding DCI in a UE search space (USS) according to a second priority order within the time unit; wherein the USS is a search space that corresponds to the terminal and is used for transmitting unicast DCI; and
in response to determining that a number of DCIs detected and received in the USS is less than the maximum unicast DCI number, detecting and receiving corresponding DCI in a group common search space according to a first priority order; wherein the group common search space is a common search space for at least transmitting the group common DCI.

4. The method according to claim 2 or 3, wherein the first priority order is used to indicate at least one of:
a priority order of group common search space identities from high to low or from low to high;
a priority order of group-radio network temporary identifier values from high to low or from low to high;
a priority order of terminal services;
a priority order of control resource set identities from high to low or from low to high.

5. The method according to claim 2 or 3, wherein the second priority order is used to indicate at least one of:
a priority order of search space identifies from high to low or from low to high;
a priority order of control resource set identities from high to low or from low to high.

6. The method according to claim 2 or 3, further comprising any of:
determining the first priority order according to a protocol;
determining the first priority order according to a radio resource control (RRC) signaling sent by a base station.

7. The method according to claim 2 or 3, further comprising any of:
determining the second priority order according to a protocol;
determining the second priority order according to a radio resource control (RRC) signaling sent by a base station.

8. The method according to claim 2 or 3, wherein the group common DCI detected and received in the group common search space is regarded as unicast downlink DCI.

9. The method according to claim 1, further comprising:
determining the maximum DCI number according to a terminal capability; wherein the terminal capability is used to indicate a maximum group common DCI number that the terminal supports to detect within the time unit.

10. The method according to claim 9, wherein the terminal capability is used to indicate the maximum group common DCI number that the terminal supports to detect within the time unit in a serving cell.

11. The method according to claim 9 or 10, wherein detecting and receiving the corresponding DCI according to the priority order of multiple DCIs within the time unit comprises:
detecting and receiving group common DCI in a group common search space within the time unit according to a third priority order; wherein the group common search space is a common search space for at least transmitting the group common DCI;
in response to determining that the number of DCIs detected and received within the time unit reaches the maximum DCI number that the terminal supports to detect within the time unit, stopping detecting DCI within the time unit comprises:
in response to determining that a number of group common DCIs detected and received within the time unit reaches the maximum group common DCI number indicated by the terminal capability, stopping detecting DCI in the group common search space within the time unit.

12. The method according to claim 11, wherein the third priority order is used to indicate at least one of:
a priority order of group common search space identities from high to low or from low to high;
a priority order of group-radio network temporary identifier values from high to low or from low to high;
a priority order of terminal services;
a priority order of control resource set identities from high to low or from low to high.

13. The method according to claim 12, further comprising any of:
determining the third priority order according to a protocol;
determining the third priority order according to a radio resource control (RRC) signaling sent by a base station.

14. The method according to claim 9, wherein a sum of the maximum group common DCI number indicated by the terminal capability and a number of unicast DCIs detected and received by the terminal within the time unit is less than or equal to a maximum unicast DCI number that the terminal supports to detect within the time unit.

15. A method for sending downlink control information, performed by a base station, comprising:
sending multiple downlink control information (DCIs) to a terminal within a time unit; wherein the multiple DCIs at least comprise group common DCI for simultaneously scheduling terminal services of multiple terminals; and
determining at least one DCI detected and received by the terminal from the multiple DCIs within the time unit according to a priority order of the multiple DCIs and a maximum DCI number that the terminal supports to detect within the time unit.

16. The method according to claim 15, wherein the maximum DCI number is a maximum unicast DCI number;
determining the at least one DCI detected and received by the terminal from the multiple DCIs within the time unit according to the priority order of multiple DCIs and the maximum DCI number that the terminal supports to detect within the time unit comprises:
in response to determining that a first number of DCIs sent by the base station in a group common search space is greater than or equal to the maximum unicast DCI number, determining that the terminal detects and receives DCIs of the maximum unicast DCI number sent by the base station in the group common search space according to a first priority order within the time unit; wherein the group common search space is a common search space for at least transmitting group common DCI;
in response to determining that the first number is less than the maximum unicast DCI number, determining that the terminal detects and receives DCIs of the first number sent by the base station in the group common search space according to the first priority order and detects and receives DCIs of a second number sent by the base station in a UE search space (USS) according to a second priority order within the time unit; wherein the USS is a search space that corresponds to the terminal and is used for transmitting unicast DCI, and a sum of the first number and the second number is equal to the maximum unicast DCI number.

17. The method according to claim 15, wherein the maximum DCI number is a maximum unicast DCI number;
determining the at least one DCI detected and received by the terminal from the multiple DCIs within the time unit according to the priority order of multiple DCIs and the maximum DCI number that the terminal supports to detect within the time unit comprises:
in response to determining that a third number of DCIs sent by the base station in a UE search space (USS) is greater than or equal to the maximum unicast DCI number, determining that the terminal detects and receives DCIs of the maximum unicast DCI number sent by the base station in the USS according to a second priority order within the time unit; wherein the USS is a search space that corresponds to the terminal and is used for transmitting unicast DCI;
in response to determining that the third number is less than the maximum unicast DCI number, determining that the terminal detects and receives DCIs of the third number sent by the base station in the USS according to the second priority order and detects and receives DCIs of a fourth number sent by the base station in a group common search space according to a first priority order within the time unit; wherein the group common search space is a common search space for at least transmitting group common DCI, and a sum of the third number and the fourth number is equal to the maximum unicast DCI number.

18. The method according to claim 16 or 17, wherein the first priority order is used to indicate at least one of:
a priority order of group common search space identities from high to low or from low to high;
a priority order of group-radio network temporary identifier values from high to low or from low to high;
a priority order of terminal services;
a priority order of control resource set identities from high to low or from low to high.

19. The method according to claim 16 or 17, wherein the second priority order is used to indicate at least one of:
a priority order of search space identifies from high to low or from low to high;
a priority order of control resource set identities from high to low or from low to high.

20. The method according to claim 16 or 17, further comprising:
sending a radio resource control (RRC) signaling to the terminal; wherein the RRC signaling is used to indicate to the terminal the first priority order and/or the second priority order configured by the base station.

21. The method according to claim 16 or 17, wherein the group common DCI sent to the terminal in the group common search space is regarded as unicast downlink DCI.

22. The method according to claim 15, wherein the maximum DCI number is a maximum group common DCI number determined according to a terminal capability of the terminal;
determining the at least one DCI detected and received by the terminal from the multiple DCIs within the time unit according to the priority order of multiple DCIs and the maximum DCI number that the terminal supports to detect within the time unit comprises:
in response to determining that a fifth number of group common DCIs sent by the base station in a group common search space is greater than the maximum group common DCI number, determining that the terminal detects and receives group common DCIs of the maximum group common DCI number sent by the base station in the group common search space according to a third priority order within the time unit; wherein the group common search space is a common search space for at least transmitting the group common DCI;
in response to determining that the fifth number is less than or equal to the maximum group common DCI number, determining that the terminal detects and receives group common DCIs of the fifth number sent by the base station in the group common search space according to the third priority order within the time unit.

23. The method according to claim 22, wherein the third priority order is used to indicate at least one of:
a priority order of group common search space identities from high to low or from low to high;
a priority order of group-radio network temporary identifier values from high to low or from low to high;
a priority order of terminal services;
a priority order of control resource set identities from high to low or from low to high.

24. The method according to claim 22, further comprising:
sending a radio resource control (RRC) signaling to the terminal; wherein the RRC signaling is used to indicate to the terminal the third priority order configured by the base station.

25. The method according to claim 22, wherein a sum of the maximum group common DCI number indicated by the terminal capability and a number of unicast DCIs sent by the base station to the terminal within the time unit is less than or equal to a maximum unicast DCI number that the terminal supports to detect within the time unit.

26. An apparatus for detecting downlink control information, applied to a terminal, comprising:
an executing module, configured to detect and receive corresponding downlink control information (DCI) according to a priority order of multiple DCIs within a time unit; wherein the multiple DCIs at least comprise group common DCI for simultaneously scheduling terminal services of multiple terminals; and
a controlling module, configured to stop detecting DCI within the time unit, in response to determining that a number of DCIs detected and received within the time unit reaches a maximum DCI number that the terminal supports to detect within the time unit.

27. An apparatus for sending downlink control information, applied to a base station, comprising:
a sending module, configured to send multiple downlink control information (DCIs) to a terminal within a time unit; wherein the multiple DCIs at least comprise group common DCI for simultaneously scheduling terminal services of multiple terminals; and
a DCI determining module, configured to determine at least one DCI detected and received by the terminal from the multiple DCIs within the time unit according to a priority order of the multiple DCIs and a maximum DCI number that the terminal supports to detect within the time unit.

28. A computer-readable storage medium, having stored therein computer programs for executing the method for detecting downlink control information according to any one of claims 1-14.

29. A computer-readable storage medium, having stored therein computer programs for executing the method for sending downlink control information according to any one of claims 15-25.

30. A device for detecting downlink control information, comprising:
a processor; and
a memory for storing processor-executable instructions;
wherein the processor is configured to perform the method for detecting downlink control information according to any one of claims 1-14.

31. A device for sending downlink control information, comprising:
a processor; and
a memory for storing processor-executable instructions;
wherein the processor is configured to perform the method for sending downlink control information according to any one of claims 15-25.
